Europäisches Patentamt

European Patent Office

Office européen des brevets

(11) Veröffentlichungsnummer: **0 546 365 B1**

# EUROPÄISCHE PATENTSCHRIFT

(45) Veröffentlichungstag der Patentschrift: **21.06.95**

(51) Int. Cl.⁶: **C03C 17/34**, C03C 17/00

(21) Anmeldenummer: **92119880.0**

(22) Anmeldetag: **23.11.92**

(54) **Mit elektrischen Leiterbahnen versehene Formkörper aus Glas und Verfahren zu ihrer Herstellung.**

(30) Priorität: **09.12.91 FR 9115219**

(43) Veröffentlichungstag der Anmeldung:
**16.06.93 Patentblatt 93/24**

(45) Bekanntmachung des Hinweises auf die
Patenterteilung:
**21.06.95 Patentblatt 95/25**

(84) Benannte Vertragsstaaten:
**DE ES FR GB IT NL PT**

(56) Entgegenhaltungen:
**WO-A-89/03862**
**US-A- 4 975 301**

**CHEMICAL ABSTRACTS, vol. 105, no. 16, Oktober 1986, Columbus, Ohio, US;abstract no. 138607w, Seite 299 ;**

(73) Patentinhaber: **Degussa Aktiengesellschaft**
**Weissfrauenstrasse 9**
**D-60311 Frankturt (DE)**

(72) Erfinder: **Roche, Guy**
**Chemin de Gigondas**
**F-87170 Isle (FR)**
Erfinder: **Delmon, Brigitte**
**Maison Neuve**
**F-87220 Eyjeaux (FR)**

**Beschreibung**

Die Erfindung betrifft mit elektrischen Leiterbahnen versehene Formkörper aus Glas, insbesondere Glasscheiben, mit farbigem Aussehen der Leiterbahnen bei der Durchsicht durch das Glas und ein Verfahren zu ihrer Herstellung, wobei auf den gegebenenfalls emaillierten Formkörper hintereinander eine farbige Schicht und eine Leiterpaste aufgetragen und der so erhaltene Gegenstand einer Wärmebehandlung unterzogen wird.

Die elektrischen Leiterbahnen von Autoheckscheiben, in Windschutzscheiben integrierte Antennen sowie Leiterbahnen für andere Zwecke werden durch Applikation einer Paste auf der Basis von Edelmetallen, vorzugsweise Silber, auf einen Formkörper aus Glas und anschließendes Einbrennen erhalten. Nach dem Ausbrand stellt man bei der Ansicht durch das Glas fest, daß der Farbton der Leiterbahnen von hellgelb bis dunkelbraun, je nach Zustand der Glasoberfläche und Brenntemperatur, schwankt.

Es wurden verschiedene Verfahren angewandt mit dem Ziel, diese mangelnde Farbhomogenität zu verhindern: Applikation auf der "Zinn"-Seite des Floatglases, Anpassen der Brenntemperatur, Zugabe von Pigmenten zu den Pasten aus Edelmetallen. Alle diese Verfahren führten nicht zu zufriedenstellenden Ergebnissen sowohl hinsichtlich des Aussehens als auch wegen zu großer Veränderung der elektrischen und mechanischen Eigenschaften (Verschweißbarkeit der Leiterbahnen).

Um das Phänomen der Verfärbung des Glases oder des Emails zu vermeiden, die durch die thermoaktivierte $Ag^+$- Migration aus der Schicht der Leiterbahnen in das Glas oder das Email verursacht wird, wodurch das Aussehen der Glasscheibe beeinträchtigt wird, hat man versucht, die Leiterbahnen auf Silberbasis durch Applikation der Silberpasten auf hochpigmentierte Glasemails und/oder solche, die Verbindungen enthalten, die in der Lage sind, die $Ag^+$-Migration zu blockieren, so weit wie möglich zu kaschieren.

Aus dem US-Patent 4,837,383 ist bekannt, daß man die Silberionen-Migration verhindern kann, indem man ein Email verwendet, das aus einem Glasfluß auf der Basis einer Glasfritte, Pigmenten, elementarem Aluminium und/oder Lithiumoxid sowie einem Anpastmedium besteht. Die Patentanmeldung EP-A 0 377 062 beansprucht die Verbesserung der Deckkraft der Glasemails gegenüber dem Silber dank der Zugabe von Silizium, Bor, Kohlenstoff, Blei und/oder Silber in ihrer elementaren Form vor dem Anpasten.

Aus offensichtlichen Kostengründen (Silber), wegen der besonderen Verarbeitungsbedingungen, die durch die Zugabe von stark reduzierenden Elementen wie Silizium oder Bor bedingt werden, aus Gründen der Stabilität gegenüber Säuren (Lithium) und der Toxizität (Blei) sind solche Zusätze nicht voll zufriedenstellend. Zudem sind, trotz des ästhetischen Aspektes, den eine vollkommene Kaschierung der Silberleitbahnen durch ein Glasemail darstellen würde, die Farbtöne dieser Glasemails auf einige Schwarz- und Grautöne beschränkt.

Ziel der vorliegenden Erfindung war demgemäß die Bereitstellung von mit elektrischen Leiterbahnen versehenen Formkörpern aus Glas, insbesondere Glasscheiben, wobei die Leiterbahnen bei der Durchsicht durch das Glas ein farbiges Aussehen haben. Die erfindungsgemäßen Formkörper sollten keine durch $Ag^+$-Migration während des Einbrennens der Leiterbahnen und während einer thermischen Verformung hervorgerufene unerwünschten Verfärbungen aufweisen. Zudem sollten die Leiterbahnen bei der Ansicht durch das Glas nicht nur grau oder schwarz, sondern auch anderweitig gefärbt sein können, um die Leiterbahnen gleichzeitig für Dekorationszwecke auszunutzen. Eine weitere Aufgabe der Erfindung betrifft die Herstellung der erfindungsgemäßen Formkörper: Das Verfahren sollte gegenüber vorbekannten Verfahren zur Herstellung gattungsgemäßer Formkörper nicht aufwendiger sein und ohne die Verwendung teurer oder spezielle Bedingungen erfordernder Hilfsstoffe auskommen. Zudem sollten verschiedene Farben erhalten werden können, ohne die elektrischen und mechanischen Eigenschaften der Leiterbahnen sowie deren Verschweißbarkeit negativ zu beeinträchtigen.

Gefunden wurden mit elektrischen Leiterbahnen versehene Formkörper aus Glas, insbesondere Glasscheiben, mit farbigem Aussehen der Leiterbahnen bei der Durchsicht durch das Glas, welche dadurch gekennzeichnet sind, daß zwischen dem gegebenenfalls emaillierten Formkörper aus Glas und den Leiterbahnen eine Schicht aus im wesentlichen Pigmenten auf der Basis anorganischer Verbindungen angeordnet ist, welche über Haftbrücken aus einem verglasenden Material mit dem Formkörper und den Leiterbahnen verbunden ist.

Die Leiterbahnen bestehen im wesentlichen aus Metallen mit hoher elektrischer Leitfähigkeit, vorzugsweise basieren sie auf Edelmetallen oder ihren Legierungen, insbesondere auf Silber.

Im Prinzip kann sich die Pigmentschicht mit der darauf befindlichen Leiterbahn unmittelbar auf dem Glas befinden, es ist aber auch möglich, daß zwischen der Pigmentschicht und dem Glas eine Email- oder Glasurschicht angeordnet ist. Derartige Schichten können transparent - farblos oder gefärbt - oder derart opak sein, daß die erfindungsgemäße Pigmentschicht bei der Durchsicht durch das Glas noch ihre Dekorwirkung entfalten kann. Sofern nicht die gesamte Glasfläche mittels eines Emails oder einer Glasur für Dekorationszwecke beschichtet ist, wird die Pigmentschicht vorzugsweise unmittelbar zwischen dem Glas und den Leiterbahnen angeordnet sein.

Bei den Pigmenten handelt es sich um anorganische Pigmente, insbesondere Oxide, Mischoxide, Sulfide von Schwermetallen, welche unter den Einbrennbedingungen der auf den Formkörper aus Glas aufgetragenen Pigment- und Leiterschicht, also bei etwa 500 bis 800 °C. stabil sind. Auch sogenannte Wirtsgitter- und Einschlußpigmente auf der Basis von beispielsweise Zirkonsilikat sind verwendbar. In der Pigmentschicht können ausgewählte Pigmente oder Pigmentgemische enthalten sein. Für schwarze Farbtöne werden beispielsweise Mischoxide auf der Basis von Chrom und Kupfer oder von Chrom, Eisen, Nickel und/oder Mangan, für graue Farbtöne neben den Schwarzpigmenten Titan-bzw. Zinndioxid, für blaue Farbtöne Kobaltspinelle, für grüne Farbtöne Chromoxid, für gelbe bis rote Farbtöne Blei-, Antimon- oder Kadmiumsulfide bzw. -selenide verwendet.

Die Pigmentschicht besteht "im wesentlichen" aus Pigmenten, jedoch können einzelne Partikel teilweise von einem verglasenden Material, das auch die Haftbrücken zur Unterschicht und zur Leiterbahn bildet, filmartig umgeben sein. Im Gegensatz zu vorbekannten Emailschichten für mit Leiterbahnen versehene Glasscheiben - vgl. EP 0 377 062 A beziehungsweise US 4,837,383 -, enthält die Pigmentschicht des erfindungsgemäßen Gegenstands im allgemeinen mehr als 60 Gew.-%, vorzugsweise mehr als 80 Gew.-%, Pigmente und weniger als 40 Gew.-%, insbesondere weniger als 20 Gew.-%, verglasendes Material, wobei sich das verglasende Material im wesentlichen in den Haftbrücken befindet.

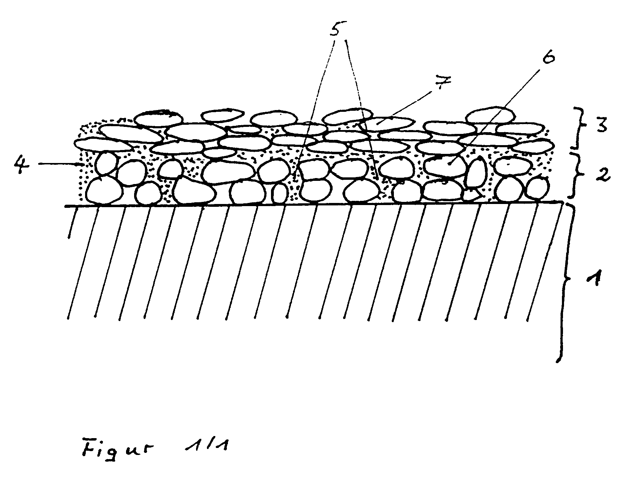

Figur 1/1 zeigt einen Querschnitt durch den erfindungsgemäßen Gegenstand, wodurch der Schichtaufbau verdeutlicht wird. Auf dem Formkörper aus Glas (1) befindet sich eine im wesentlichen aus Pigmenten (6) bestehende Pigmentschicht (2) und darüber die Leiterbahn (3) mit den Metallpartikeln (7). Das verglasende Material (4) bildet zwischen der Leiterbahn und dem Glas Haftbrücken (5), welche die Pigmentschicht an einigen Stellen durchdringen.

Ein zweckmäßiges Verfahren zur Herstellung des erfindungsgemäßen Gegenstands umfaßt die Schritte
(i) Ausbildung einer farbigen Schicht auf einem emaillierten oder nicht emaillierten Formkörper aus Glas,
(ii) Auftragung einer Leiterpaste, enthaltend ein Metallpulver und ein verglasendes Material in einem flüssigen oder verflüssigbaren Trägermedium auf die farbige Schicht und
(iii) Wärmebehandlung des so erhaltenen Gegenstands bei einer Temperatur oberhalb des Erweichungsbeginns des verglasenden Materials und unterhalb 800 °C,
und ist dadurch gekennzeichnet, daß man zur Ausbildung der farbigen Schicht den Formkörper zumindest an den für die Leiterbahnen vorgesehenen Stellen mit einem Pigmente auf der Basis anorganischer Verbindungen enthaltenden Beschichtungsmaterial, das frei von verglasenden Materialien ist, beschichtet.

Gemäß einer bevorzugten Ausführungsform der Erfindung enthält das Pigmente enthaltende Beschichtungsmaterial außer den Pigmenten im wesentlichen ein oder mehrere organische Bindemittel und, soweit erforderlich, Lösungsmittel hierfür.

Gemäß einer weiteren Ausführungsform der Erfindung wird nach der Auftragung des Pigmente enthaltenden Beschichtungsmaterials auf den Formkörper die erhaltene Schicht verfestigt, indem man in Abhängigkeit von der Zusammensetzung des Beschichtungsmaterials darin enthaltende Lösungsmittel abdampft, polymerisationsfähige Bindemittel polymerisiert bzw. vernetzt und schmelzbare Bindemittel durch Abkühlung erstarren läßt.

Gemäß einer weiteren Ausführungsform der Erfindung werden nicht durch Leiterbahnen abgedeckte Stellen der aufgetragenen, Pigmente enthaltenden Schicht nach der Wärmebehandlung durch eine Wäsche mit Wasser entfernt.

Wie bereits ausgeführt, dienen als Formkörper vorzugsweise Glasscheiben, welche gegebenenfalls auch emailliert sein können. Die einbrennfähige Leiterpaste enthält als Leitfähigkeitspartikel bevorzugt Edelmetallpulver, insbesondere Silber, vorzugsweise in Form feinster Teilchen (mikrokristalline Partikel und/oder Pailletten).

Bei dem verglasenden Material der Leiterpaste handelt es sich im allgemeinen um eine Glasfritte oder ein Gemisch von Glasfritten. Die Auswahl der Glasfritte(n) wird der Fachmann in bekannter Weise in Abhängigkeit von der gewünschten Einbrenntemperatur und dem Viskositätsverhalten der Glasfritte(n) bei der Einbrenntemperatur vornehmen. Das Metallpulver und die Glasfritte(n) befinden sich in homogener Verteilung in einem flüssigen Trägermedium, um eine druckfähige Paste zu erhalten. Die Anwendung der Leiterpaste erfolgt mittels bekannter Drucktechniken, vorzugsweise mittels Siebdruck auf die zuvor aufgetragene und in geeigneter Weise verfestigte Pigmentschicht.

Es wurde gefunden, daß es zur Ausbildung der farbigen Schicht, hier also der Pigmentschicht, nicht der Verwendung eines pigmentierten, spezielle Zusätze enthaltenden Emails bedarf. Vielmehr wird die erfindungsgemäß erforderliche Pigmentschicht unter Verwendung eines von verglasenden Materialien freien Beschichtungsmaterials auf dem Formkörper appliziert. Die Applikation der Pigmentschicht erfolgt auf der für die Leiterbahnen vorgesehenen gesammten Oberfläche des Formkörpers, zumindest aber an den für die Leiterbahnen vorgesehenen Stellen. Die Applikation der Pigmentschicht läßt sich mittels üblicher, dem Fachmann bekannter Techniken, wie beispielsweise Spritzen, Stempeldruck, Siebdruck, wobei Siebdruck bevorzugt wird, vornehmen. Demgemäß ist das Pigmente enthaltende Beschichtungsmaterial im allgemeinen flüssig bis pastös. Bevorzugte Beschichtungsmaterialien enthalten außer den Pigmenten im wesentlichen ein oder mehrere organische Bindemittel und, soweit erforderlich, Lösungsmittel hierfür. Gegebenenfalls können übliche Verarbeitungs- und/oder Druckhilfsmittel in geringer Menge anwesend sein. Zweckmäßigerweise wird der Pigmentgehalt im Beschichtungsmaterial mehr als 30 Gew.-% bis etwa 80 Gew.-% ausmachen.

Geeignete Bindemittel sind thermoplastische Harze, darunter z. B. Homo- und Copolymere von Acryl- und Methacrylsäureestern, Kohlenwasserstoffharze, Celluloseharze, Kolophoniumharze. Auch Alkylharze sind häufig Bestandteil von Druckmedien.

Um eine druckfähige Konsistenz des Pigmente enthaltenden Beschichtungsmaterials zu erhalten, werden dem Fachmann bekannte Lösungsmittel oder Lösungsmittelgemische eingesetzt. Besonders wirksame Lösungsmittel für Druckzwecke sind beispielsweise Terpenkohlenwasserstoffe. Daneben sind aber auch wäßrige Lösungsmittelsysteme in Druckmedien einsatzfähig. Unter den Lösungsmitteln sind auch polymerisationsfähige, insbesondere fotopolymerisationsfähige, Verbindungen mit einer und mehreren Doppelbindungen zu verstehen: beispielhaft werden hier Alkyl(meth)acrylate, Alkoxyalkyl(meth)acrylate, Hydroxyalkyl-(meth)acrylate, Alkylenglykoldi(meth)acrylate, Dialkylenglykoldi(meth)acrylate, Trimethylolpropantri(meth)-acylat genannt.

Polymerisationsfähige Verbindungen enthaltende Beschichtungsmedien enthalten zum Zwecke der Fotopolymerisation, etwa durch UV-Belichtung, ein oder meist mehrere bekannte Fotoinitiatoren.

Nach der Applikation der Pigmentschicht in flüssiger bis pastöser Form wird diese verfestigt, wobei sich die Verfestigungsmethode in an sich bekannter Weise nach den anwesenden Lösungs- und Bindemitteln richtet: Flüchtige Lösungsmittel werden durch Trocknen - an der Luft, in einem Ofen oder mittels Infrarotstrahlern - verflüchtigt, wobei die resultierende Pigmentschicht fest und überdruckfähig wird. Polymerisationsfähige Verbindungen enthaltende Beschichtungsmaterialien lassen sich durch UV-induzierte Fotopolymerisation verfestigen. Schließlich können bei Raumtemperatur feste, bei mäßig erhöhter Temperatur aber schmelzbare Bindemittel enthaltende Beschichtungsmaterialien in der Wärme appliziert und durch Abkühlen verfestigt werden.

Die Wärmebehandlung des mit der Pigmentschicht und Leiterbahnen versehenen Formkörpers erfolgt in üblicher, in der Dekorationstechnik für Glas bekannter Weise. Während des Aufheizens, aber unterhalb des Erweichungsbeginns des verglasenden Materials zersetzt sich der gesamte organische Anteil der Pigmentschicht, wobei die gebildeten Zersetzungsgase entweichen und eine reine Pigmentschicht zwischen dem Glas und der Leiterschicht verbleibt. Die Einbrenntemperatur, bei welcher sich die Haftbrücken aus dem verglasenden Material zwischen der Leiterschicht und dem Glas ausbilden und damit die Leiter- und die Pigmentschicht auf dem Glas fixieren, liegt meist zwischen 550 °C und 760 °C, insbesondere zwischen 630 °C und 680 °C.

Die Wärmebehandlung zum Einbrennen der Leiterbahnen kann mit bekannten Maßnahmen zur Formgebung und/oder Härtung des Formkörpers aus Glas, kombiniert werden.

Dort, wo sich auf der Pigmentschicht keine Leiterbahn befindet, läßt sich die hier nach der Wärmebehandlung nur lose haftende Pigmentschicht durch eine Wäsche mit Wasser, gegebenenfalls mittels eines Druckstrahls, einfach entfernen.

Die nach dem dargelegten Verfahren erhaltenen Formkörper aus Glas weisen elektrische Leiterbahnen auf, welche bei der Ansicht durch das Glas einheitlich gefärbt sind und das Metall nicht durchscheinen lassen. Die Leiterbahnen dienen damit gleichzeitig der Dekoration des Formkörpers aus Glas, wie Glasscheiben. Die elektrischen Leiterbahnen zeigen die bekannten elektrischen und mechanischen Eigenschaften und lassen sich problemlos schweißen bzw. löten.

Es war nicht vorhersehbar, daß die Leiterbahnen sicher auf der Pigmentschicht haften, welche nur mittels der Haftbrücken auf dem Glas fixiert ist. Es bedurfte auch nicht der Verwendung spezieller Zusatzstoffe, wie dies aus vorbekannten Emails bekannt war, um deckende farbige Dekorschichten unter den Leiterbahnen zu erhalten. Durch die im wesentlichen aus Pigmenten bestehende, nur durch einzelne Haftbrücken aus einem verglasenden Material durchdrungene Pigmentschicht kommt es praktisch nicht mehr zur thermoaktivierten Migration von $Ag^+$-Ionen im Falle von Leiterbahnen auf Basis Silber in das Glas des Formkörpers; eine Verfärbung des Glases im Bereich unter der Pigmentschicht wird damit vermieden.

**Beispiele**

Als Beschichtungsmaterial dienten für Siebdrucktechnik eingestellte Pasten aus den in der Tabelle angegebenen Pigmenten in den angegebenen Medien (= Bindemittel + Lösemittel + Hilfsstoffe). Nach Auftrag der Pasten mittels Siebdruck und Fixierung gemäß Angabe in der Tabelle wurde eine Leiterschicht unter Verwendung der angegebenen einbrennfähigen Ag-Leiterpasten, per Siebdruck aufgetragen. Die Wärmebehandlung erfolgte unter den in der Tabelle angegebenen Bedingungen. Schließlich werden Pigmente von nicht mit einer Leiterbahn überdeckten Stellen abgespült.

Tabelle

| Beispiel Nr. | 1 | 2 | 3 | 4 | 5 |
|---|---|---|---|---|---|
| Beschichtungsmaterial | | | | | |
| Pigment (Typ) | (Cr$_2$O$_3$-CuO) | (CoO-SiO$_2$) | Fe$_2$O$_3$-Cr$_2$O$_3$-ZnO | (Cr$_2$O$_3$-CuO) | (Cr$_2$O$_3$-CuO) |
| " (Gew.-%) | 50 | 50 | 30 | 50 | 50 |
| Medium (Typ) | EC 5 *) | EC 5 *) | EC 5 *) | 4462 *) | 80887 *) |
| " (Gew.-%) | 50 | 50 | 70 | 50 | 50 |
| Fixierung der Pigmentschicht | Verdampfen der Lösungsmittel durch Trocknen | Verdampfen der Lösungsmittel durch Trocknen | Verdampfen der Lösungsmittel durch Trocknen | thermo-plastisch | UV-Trocknung |
| Dicke der Pigmentschicht (µm) nach der Trocknung | 25 | 25 | 20 | 40 | 35 |
| Ag-Leiterpaste (Typ) | SP 1409 *) | Ag 574861/06 *) | Ag 574861/06 *) | | |
| Dicke der Leiterschicht (µm) | 15 | 15 | 15 | 25 | 15 |
| Wärmebehandlung | | | | | |
| Temperatur (°C) | 650 | 650 | 650 | 650 | 650 |
| Dauer (min) | 3 | 3 | 3 | 3 | 3 |
| Farbe des Dekors | schwarz | blau | braun | schwarz | schwarz |

*) Produktnummer der Handelsprodukte der Degussa AG

## Patentansprüche

1. Mit elektrischen Leiterbahnen versehene Formkörper aus Glas, insbesondere Glasscheiben, mit farbigem Aussehen der Leiterbahnen bei der Durchsicht durch das Glas,

dadurch gekennzeichnet,
daß zwischen dem gegebenenfalls emaillierten Formkörper aus Glas (1) und den Leiterbahnen (3) eine Schicht (2), im wesentlichen aus Pigmenten (6) auf der Basis anorganischer Verbindungen bestehend, angeordnet ist, welche über Haftbrücken (5) aus einem verglasenden Material mit dem Formkörper und den Leiterbahnen verbunden ist.

2. Mit Leiterbahnen versehene Formkörper aus Glas gemäß Anspruch 1,
dadurch gekennzeichnet,
daß die Leiterbahnen im wesentlichen aus Silber oder anderen Edelmetallen oder ihren Legierungen bestehen.

3. Mit Leiterbahnen versehene Formkörper aus Glas gemäß Anspruch 1 oder 2,
dadurch gekennzeichnet,
daß die den Leiterbahnen zugekehrte Seite des Formkörpers nicht emailliert ist.

4. Verfahren zur Herstellung von mit elektrischen Leiterbahnen versehenen Formkörpern aus Glas, insbesondere Glasscheiben, mit farbigem Aussehen der Leiterbahnen bei der Durchsicht durch das Glas, umfassend die Schritte

(i) Ausbildung einer farbigen Schicht (2) auf einem emaillierten oder nicht emaillierten Formkörper aus Glas (1),

(ii) Auftragung einer Leiterpaste, enthaltend ein Metallpulver (7) und ein verglasendes Material (4) in einem flüssigen oder verflüssigbaren Trägermedium auf die farbige Schicht und

(iii) Wärmebehandlung des so erhaltenen Gegenstands bei einer Temperatur oberhalb des Erweichungsbeginns des verglasenden Materials und unterhalb 800 °C,

dadurch gekennzeichnet,
daß man zur Ausbildung der farbigen Schicht den Formkörper zumindest an den für die Leiterbahnen vorgesehenen Stellen mit einem Pigmente (6) auf der Basis anorganischer Verbindungen enthaltenden Beschichtungsmaterial, das frei von verglasenden Materialien ist, beschichtet.

5. Verfahren nach Anspruch 4, dadurch gekennzeichnet,
daß die Leiterpaste Edelmetallpulver, insbesondere Silber, und Glasfritten enthält.

6. Verfahren nach Anspruch 4 oder 5, dadurch gekennzeichnet,
daß das Pigmente enthaltende Beschichtungsmaterial außer den Pigmenten im wesentlichen ein oder mehrere organische Bindemittel und, soweit erforderlich, Lösungsmittel hierfür enthält.

7. Verfahren nach Anspruch 6,
dadurch gekennzeichnet,
daß man nach der Auftragung des Pigmente enthaltenden Beschichtungsmaterials auf den Formkörper die erhaltene Schicht verfestigt, indem man in Abhängigkeit von der Zusammensetzung des Beschichtungsmaterials darin enthaltende Lösungsmittel abdampft, polymerisationsfähige Bindemittel polymerisiert bzw. vernetzt und schmelzbare Bindemittel durch Abkühlung erstarren läßt.

8. Verfahren nach einem oder mehreren der Ansprüche 4 bis 7,
dadurch gekennzeichnet,
daß man die Wärmebehandlung bei 630 bis 680 °C durchführt, wobei, sofern erwünscht, gleichzeitig der Formkörper verformt werden kann.

9. Verfahren nach einem oder mehreren der Ansprüche 4 bis 8,
dadurch gekennzeichnet,
daß nicht durch Leiterbahnen abgedeckte Stellen der aufgetragenen, Pigmente enthaltenden Schicht nach der Wärmebehandlung durch eine Wäsche mit Wasser entfernt werden.

**Claims**

1. Moulded bodies made of glass, particularly glass panes, provided with electrically conductive tracks, with coloured appearance of the conductive tracks when the glass is looked through, characterized in that a layer (2) essentially comprising pigments (6) on the basis of inorganic compounds and which is connected to the moulded body and the conductive tracks via adhesive bridges (5) of a vitrifying material is arranged between the moulded body made of glass (1), which may be enamelled if required, and the conductive tracks (3).

2. Moulded bodies made of glass provided with conductive tracks according to Claim 1, characterized in that the conductive tracks essentially comprise silver or other precious metals or their alloys.

3. Moulded bodies made of glass provided with conductive tracks according to Claim 1 or 2, characterized in that the side of the moulded body facing the conductive tracks is not enamelled.

4. Process for manufacturing moulded bodies made of glass, particularly glass panes, provided with electrically conductive tracks, with coloured appearance of the conductive tracks when the glass is looked through, comprising the steps
   (i) formation of a coloured layer (2) on an enamelled or non-enamelled moulded body made of glass (1),
   (ii) application of a conductive paste, containing a metal powder (7) and a vitrifying material (4) in a liquid or liquefiable carrier medium onto the coloured layer and
   (iii) heat-treatment of the object obtained in this way at a temperature above that at which the vitrifying material begins to soften and below 800°C,
   characterized in that in order to form the coloured layer the moulded body is coated at least at the places intended for the conductive tracks with a coating material containing pigments (6) on the basis of inorganic compounds and which is free from vitrifying materials.

5. Process according to Claim 4, characterized in that the conductive paste contains precious metal powder, particularly silver, and glass frits.

6. Process according to Claim 4 or 5, characterized in that apart from the pigments the coating material containing pigments essentially contains one or more organic binders and, where required, solvents therefor.

7. Process according to Claim 6, characterized in that following the application of the coating material containing pigments onto the moulded body the layer obtained is rigidified in that according to the composition of the coating material, solvents contained therein are evaporated, polymerizable binders are polymerized and/or crosslinked and fusible binders are allowed to solidify by cooling.

8. Process according to one or more of Claims 4 to 7, characterized in that the heat-treatment is carried out at 630 to 680 °C, it being possible for the moulded bodies to be deformed at the same time if this is desired.

9. Process according to one or more of Claims 4 to 8, characterized in that places on the applied layer containing pigments which are not covered by conductive tracks are removed after the heat-treatment by means of a wash with water.

**Revendications**

1. Objets en verre munis de trajets conducteurs électriques, en particulier disques ou plaques de verre, avec un aspect coloré des trajets conducteurs lorsqu'on regarde à travers le verre, caractérisés en ce que, entre le corps moulé en verre (1) et les trajets conducteurs (3), est disposée une couche (2) essentiellement composée de pigments (6) à base de composés minéraux, couche qui est liée par des ponts de fixation (5) en une matière vitrifiante au corps moulé et aux trajets conducteurs.

2. Objets en verre munis de trajets conducteurs selon la revendication 1, caractérisés en ce que les trajets conducteurs sont constitués essentiellement d'argent ou d'autres métaux nobles ou de leurs alliages.

3. Objets en verre munis de trajets conducteurs selon les revendications 1 ou 2, caractérisés en ce que la face du corps moulé tournée vers les trajets conducteurs n'est pas émaillée.

4. Procédé de fabrication de corps moulé en verre munis de trajets conducteurs électriques, en particulier disques ou plaques de verre, avec un aspect coloré des trajets conducteurs en regardant à travers le verre, comprenant les étapes :

(i) formation d'une couche colorée sur un corps moulé en verre émaillé ou non émaillé,

(ii) application d'une pâte conductrice, contenant une poudre métallique ou une matière vitrifiante dans un milieu de support liquide ou liquéfiable, sur la couche colorée et,

(iii) traitement thermique de l'objet ainsi obtenu à une température au-dessus du début de ramollissement de la matière vitrifiable et en dessous de 800°C,

caractérisé en ce que pour la formation de la couche colorée on recouvre le corps moulé au moins aux endroits prévus pour les trajets conducteurs d'une matière de recouvrement contenant des pigments (6) à base de composés minéraux, matière qui est exempte de matières vitrifiantes.

5. Procédé selon la revendication 4, caractérisé en ce que, la pâte conductrice contient de la poudre de métal noble, en particulier d'argent et des frittes de verre.

6. Procédé selon les revendications 4 ou 5, caractérisé en ce que, la matière de recouvrement contenant des pigments contient outre les pigments essentiellement un ou plusieurs liants organiques et, si nécessaire, des solvants pour cela.

7. Procédé selon la revendication 6, caractérisé en ce que, après l'application de la matière de recouvrement contenant des pigments sur le corps moulé, on consolide la couche obtenue, en éliminant par évaporation en fonction de la composition de la matière de recouvrement des solvants contenus dans cette dernière, on polymérise ou on réticule des liants aptes à polymériser et on fait durcir des liants fusibles par refroidissement.

8. Procédé selon une ou plusieurs des revendications 4 à 7, caractérisé en ce que, on réalise le traitement thermique de 630 à 680°C, traitement dans lequel, si on le désire, le corps moulé est déformé.

9. Procédé selon une ou plusieurs des revendications 4 à 8, caractérisé en ce que, des endroits de la couche appliquée, contenant des pigments, non recouverts par des trajets conducteurs sont éliminés après le traitement thermique par un lavage à l'eau.

Figur 1/1